# DEMANDE DE BREVET EUROPEEN

(11) **EP 2 242 007 A2**
(43) Date de publication de la demande: **20.10.2010**
(21) Numéro de dépôt: 10159908.2
(22) Date de dépôt: 14.04.2010
(51) Int. Cl.: G06K 19/077, H04B 1/38

(54) **Dispositif électronique comprenant une carte à microcircuit et une batterie auxiliaire.**

(30) Priorité: 17.04.2009 FR 0952513
(71) Demandeur: Oberthur Technologies, 92300 Levallois-Perret (FR)
(72) Inventeur: Dumoulin, Jérôme, 94140 Alfortville (FR); Danree, Arnaud, 78260 Acheres (FR); Stranges, Lorenzo, 92200 Neuilly sur Seine (FR); Bosquet, Olivier, 35500 Vitre (FR)
(74) Mandataire: Desormiere, Pierre-Louis

(57) **Abrégé**

Ce dispositif (10) comprend une carte à microcircuit (11) d'identification à un réseau de téléphonie mobile et la carte (11) comprend un microcircuit (16) muni d'une borne d'alimentation (20) et un premier contact électrique externe (18) apte à être couplé électriquement à une batterie principale (106) et raccordé électriquement au microcircuit (16). En outre, le dispositif (10) comprend une batterie auxiliaire (28). Plus particulièrement, la carte (11) comprend un deuxième contact électrique (24), distinct du premier contact (18), raccordé électriquement à la borne d'alimentation (20) du microcircuit (16) et à la batterie auxiliaire (28) et un organe électriquement conducteur (38) de raccordement des premier (18) et deuxième (24) contacts à cette borne (20).

## Description

La présente invention concerne le domaine technique des cartes à microcircuit et plus précisément mais non spécifiquement le domaine technique des cartes d'identification à un réseau de téléphonie mobile.

Une carte d'identification est connue également sous le nom de carte SIM (acronyme anglais pour « Subscriber Identity Card Module ») ou carte USIM (pour « Universal Subscriber Identity Module » encore appelée carte UICC pour « UMTS Integrated Circuit Card ») ou encore carte RUIM (pour « Removable Universal Identity Module »).

Ces cartes comprennent généralement des moyens de traitement de données et des moyens de mémorisation de données pour le stockage des informations spécifiques à un utilisateur du réseau de téléphonie mobile.

La présence de cette carte au sein d'un terminal mobile (tel qu'un téléphone portable) permet à ce terminal (grâce aux informations contenues dans la carte d'identification) de se connecter au réseau et d'échanger des données avec d'autres dispositifs du réseau. Cette carte forme un élément sécurisé du téléphone permettant une authentification de l'utilisateur de cette carte grâce à une clef d'authentification mémorisée par exemple dans les moyens de mémorisation de la carte.

Il est connu dans l'état de la technique d'intégrer dans des terminaux mobiles d'autres applications en plus de l'application de téléphonie mobile telles que des applications de porte-monnaie électronique, de titres de transports (train, métro, bus, avion) sous forme de carte à microcircuit sans contact, etc.

Par exemple, le paiement par terminal mobile, désigné couramment par l'expression « mobile paiement », consiste à payer un produit (ou service) par l'intermédiaire de son terminal mobile. De façon classique, le paiement est effectué par communication sans contact grâce à la présence d'une antenne de communication à champ proche incorporée dans le terminal qui permet l'échange de données entre le terminal et un équipement externe tel qu'une borne de paiement. Ainsi, pour utiliser ce type de services ou pour échanger des informations, l'utilisateur approche son terminal mobile de la borne, de manière à ce qu'une transaction par communication en champ proche puisse être effectuée.

Au cours de la transaction, le microcircuit de la carte d'identification effectue des échanges de données sécurisées permettant d'assurer la sécurité de la communication.

A cet effet, la carte d'identification est munie d'une série de contacts externes, un des contacts étant apte à être couplé électriquement à la batterie principale du terminal mobile, qui alimente également les différents organes électriques du terminal, tels que l'écran, le clavier, etc. Par exemple, la série de contacts est conforme à la norme ISO 7816 des cartes à microcircuits et le contact externe est le contact C1 défini par cette norme.

Toutefois, lorsque la batterie principale est déchargée ou le terminal mobile éteint, le microcircuit n'est plus alimenté et ne peut effectuer aucune transaction ce qui présente un inconvénient certain pour l'utilisateur du terminal.

Un but de la présente invention est de proposer une solution permettant le fonctionnement des applications liées à la carte SIM indépendamment de l'état de fonctionnement du terminal mobile.

A cet effet, l'invention a pour objet un dispositif électronique comprenant une carte à microcircuit d'identification à un réseau de téléphonie mobile, comprenant un microcircuit muni d'une borne d'alimentation et un premier contact électrique externe apte à être couplé électriquement à une batterie principale et raccordé électriquement au microcircuit, **caractérisé en ce que** le dispositif comprend une batterie auxiliaire **et en ce que** la carte comprend :
- un deuxième contact électrique, distinct du premier contact, raccordé électriquement à la borne d'alimentation du microcircuit et à la batterie auxiliaire,
- un organe électriquement conducteur de raccordement des premier et deuxième contacts à cette borne.

On entend au sens de l'invention par « contact électrique externe », un contact électrique affleurant à la surface de la carte.

Les deux contacts électriques sont raccordés tous les deux à la borne d'alimentation du microcircuit. Ainsi, ces deux contacts sont destinés à être couplés à la batterie principale du terminal mobile et à une batterie auxiliaire qui est raccordée au deuxième contact. Cette batterie auxiliaire permet d'alimenter la carte d'identification, par exemple de type SIM, de manière indépendante du terminal mobile. Dans ce cas, lorsque la batterie principale est déchargée, la batterie auxiliaire permet d'alimenter le microcircuit de la carte SIM de manière à ce que les applications, telles que l'application « mobile paiement » puissent fonctionner.

De préférence, l'organe conducteur comprenant des première et deuxième branches conductrices comprenant une extrémité commune raccordée électriquement à la borne d'alimentation et des première et deuxième extrémités opposées à l'extrémité commune, raccordées respectivement aux premier et deuxième contacts, la première branche est munie d'un premier interrupteur susceptible d'adopter un premier état de raccordement électrique du premier contact à la borne et un deuxième état de séparation du premier contact et de la borne.

Dans un mode de réalisation de l'invention, le premier interrupteur comprend une diode agencée sur la première branche afin d'autoriser la circulation d'un courant dans un sens allant du premier contact vers le deuxième contact et d'interdire la circulation du courant dans un sens opposé.

Ainsi, grâce à la diode, lorsque la batterie principale est déchargée, la batterie auxiliaire ne se décharge pas dans la batterie principale puisque le courant ne peut pas circuler de la batterie auxiliaire vers la batterie principale. En outre, lorsque la batterie principale est chargée, elle alimente le microcircuit tout en rechargeant la batterie auxiliaire si cette dernière est déchargée.

De préférence, le microcircuit comprend des moyens de commande du premier interrupteur en fonction d'un paramètre prédéfini. Dans un mode de réalisation, la première branche portant des moyens de mesure d'une intensité du courant la traversant, le paramètre est défini comme étant le franchissement à la hausse et/ou à la baisse d'au moins un seuil prédéfini d'intensité par l'intensité du courant mesurée. Il est possible ainsi d'avoir deux seuils distincts à la hausse et à la baisse de l'intensité du courant mesurée.

De préférence, l'organe conducteur forme un circuit imprimé sur l'une des faces du support. Ainsi, l'organe est relativement peu encombrant et facile à réaliser.

Dans un mode de réalisation de l'invention, la carte comprend un module comprend un support portant sur l'une de ses faces le premier contact externe et, sur l'autre de ses faces, le microcircuit et l'organe conducteur.

Un dispositif selon l'invention peut en outre comprendre l'une ou plusieurs des caractéristiques selon lesquelles :
- la deuxième branche est munie d'un deuxième interrupteur susceptible d'adopter un premier état de raccordement de la batterie auxiliaire à la borne d'alimentation et un deuxième état de séparation de la batterie auxiliaire et de cette borne ;
- le deuxième contact est un contact externe et la batterie auxiliaire est externe à la carte ;
- la carte comprend une interface de contacts externes agencée affleurant à la surface de la carte et comprenant les premier et deuxième contacts ;
- l'interface comprend une première série de contacts externes, par exemple conforme à la norme ISO-7816, comprenant le premier contact et une deuxième série de contacts externes comprenant le deuxième contact, les première et deuxième séries étant respectivement agencées pour être couplées respectivement à des premier et deuxième équipements externes au microcircuit ;
- les première et deuxième séries de contacts sont portées respectivement par des première et deuxième zones de l'interface ;
- au moins un contact est commun aux deux séries, par exemple le contact C5 défini par la norme ISO 7816 et est formé par une plage de contact qui s'étend sur les première et deuxième zones ;
- le deuxième contact est un contact interne au module et la batterie auxiliaire est incorporée dans le corps de la carte.

L'invention a en outre pour objet un système électronique, tel qu'un terminal mobile, comprenant un logement pour une carte à microcircuit et une batterie principale d'alimentation du microcircuit, **caractérisé en ce qu**'il comprend un dispositif selon l'une quelconque des revendications précédentes, la batterie principale étant couplée électriquement avec le premier contact et la batterie auxiliaire étant couplée électriquement avec le second contact.

D'autres caractéristiques et avantages de l'invention apparaîtront à la lumière de la description qui suit, faite en référence aux dessins annexés dans lesquels :
- la figure 1 est une vue de dessus d'un dispositif selon l'invention comprenant une carte à microcircuit et une batterie auxiliaire raccordée électriquement à la carte ;
- la figure 2 est une vue de dessous du dispositif de la figure 1 ;
- la figure 3 est une vue en perspective de la carte à microcircuit du dispositif de la figure 1 ;
- la figure 4 représente une vue de dessous d'un module incorporé dans la carte de la figure 3 comprenant un organe conducteur de raccordement électrique de la batterie auxiliaire au microcircuit ;
- la figure 5 est un schéma électrique illustrant le raccordement électrique des contacts au microcircuit de la figure 4 ;
- les figures 6 à 8 représentent des variantes de réalisation du schéma électrique de la figure 5 ;
- la figure 9 représente un organe flexible de raccordement de la batterie auxiliaire et de la carte de la figure 3 ;
- la figure 10 est une vue en coupe de l'organe flexible selon la ligne 10-10 de la figure 1 ;
- la figure 11 est une vue en coupe d'un terminal mobile comprenant le dispositif de la figure 1.

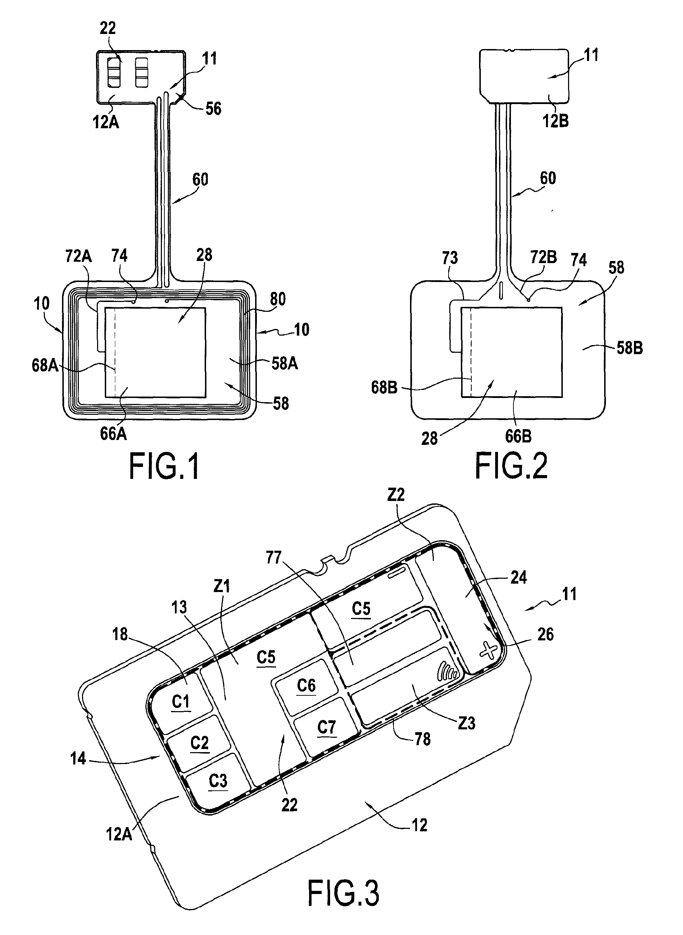

On a représenté sur **la** **figure 1** un dispositif selon l'invention. Ce dispositif électronique est désigné par la référence générale 10.

Le dispositif 10 comprend une carte à microcircuit 11. Dans ce mode de réalisation, la carte à microcircuit 11 est une carte d'identification à un réseau de téléphonie mobile et a un format correspondant sensiblement au format ID-000, désigné également par format micro-SIM ou Plug-in SIM défini par la norme ISO 7816. En variante, d'autres formats de carte peuvent convenir.

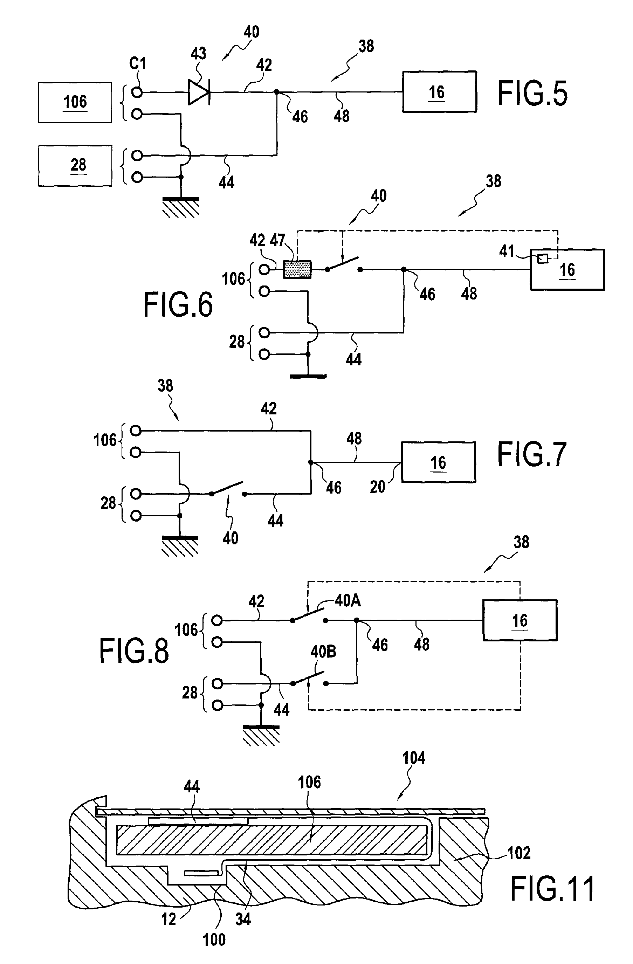

Cette carte 11 est notamment destiné à être incorporée dans un compartiment 100 d'un corps 102 d'un terminal mobile 104 tel que celui représenté en coupe sur **la** **figure 11****.** Plus précisément, la carte 11 est une carte d'identification à un réseau de téléphonie mobile du type SIM, USIM, RUIM.

Par exemple, le corps de carte 12 délimite les dimensions extérieures de la carte 11 qui sont dans cet exemple conforme au format ID-000. Ainsi, le corps de carte 12 a une forme générale de plaque d'épaisseur 0.76 mm et de largeur 2.5 mm et de longueur 2.5 mm. Ce corps de carte 12 délimite également des faces opposées désignées par la suite par les références 12A et 12B.

En référence à **la** **figure 1****,** cette carte 11 comprend un corps 12 de carte rigide comprenant un microcircuit 16 et un premier contact électrique externe 18 raccordé électriquement à une borne 20 d'alimentation du microcircuit 16. Ce contact électrique externe 18 est en particulier apte à être raccordé à une batterie principale 106 du terminal mobile 104 (telle que représentée sur **la** **figure 11****).** Ce microcircuit 16 comprend des moyens de communication avec un dispositif de lecture de carte par contact (non représenté).

De préférence, le microcircuit 16 est incorporé dans un module 14. Ce module à microcircuit 14 est représenté en détail sur **la** **figure 3****.** En outre, généralement, le corps 12 de carte est muni d'une cavité et le module 14 est logé dans la cavité.

La carte 11 comprend de préférence une interface 13 de contacts externes affleurant à la surface de la carte 11.

Dans cet exemple, le module 14 comprend un support 30 électriquement isolant délimitant des faces opposées interne 301 et externe 30E. Le support 30 est par exemple réalisé en fibre de verre de type époxy, en polyester ou bien en papier et a une épaisseur comprise par exemple entre 0.1 mm et 0.2 mm. Le microcircuit 16 est porté de préférence par la face interne 301 du support 30 comme cela est représenté sur la **figure 2****.** En outre, l'interface 13 est portée par la face externe 30E du support 30 du module 14. Comme cela est visible notamment sur **la** **figure 3****,** l'interface physique 13 s'étend sur une surface très inférieure à la surface totale de la carte 10.

L'interface 13 est de préférence réalisée dans une couche de matériau métallique telle que du cuivre mais peut également être réalisée, en variante, par sérigraphie d'encre conductrice de type encre époxy chargée de particules d'argent ou d'or ou par sérigraphie d'un polymère électriquement conducteur.

De préférence, le module 14 comprend une première série 22 de contacts comprenant le premier contact 18, cette première série 22 étant agencée pour être couplée électriquement avec un équipement externe au module 14.

Ainsi, dans ce mode de réalisation, l'équipement externe est le terminal mobile 104 tel que celui représenté en coupe sur **la** **figure 11****.** Un tel terminal mobile 104 comprend notamment une tête de lecture (non visible sur la figure) comprenant des pattes métalliques de contact agencées pour être couplées avec les contacts de la première série 22.

Par exemple, les contacts de la première série 22 sont conformes à la norme ISO 7816 et leur disposition sur le corps de carte 12 est définie par la norme ISO 7816-2. Les contacts forment ainsi des plages métalliques qui correspondent aux contacts C1, C2, C3, C5, C6, C7 de la norme ISO 7816. Dans cet exemple, le premier contact externe 18 est le contact C1. L'emplacement des contacts électriques de la première série 22 sur le corps de la carte 14 est notamment défini par la norme ISO 7816-2.

En effet, la norme ISO 7816-2 définit le nombre, la fonction et la position des contacts électriques de surface de la carte 11 avec une interface annexe telle que la tête de lecture du terminal mobile 104. Classiquement, les contacts sont référencés C1 à C8 dans cette norme. Les contacts C4 et C8 n'ont pas de fonction attribuée par cette norme.

En particulier, le premier contact 18, c'est-à-dire correspondant au contact C1, est utilisé pour l'alimentation du microcircuit 16. Ainsi, dans ce mode de réalisation, la batterie principale 106 du terminal mobile 104 est couplée électriquement avec le premier contact 18 par l'intermédiaire de la tête de lecture du terminal 104.

Le module 14 comprend également un deuxième contact électrique 24, distinct du premier contact 18, raccordé électriquement à la borne d'alimentation 20 du microcircuit 16.

En particulier, le dispositif 10 comprend encore une batterie auxiliaire 28 raccordée électriquement au deuxième contact 24.

Dans ce mode de réalisation, le deuxième contact 24 est un contact externe à la carte 11 de manière à ce qu'il soit directement accessible en-dehors de la carte 11. Cette batterie 28 comprend notamment une borne positive destinée à être couplée électriquement avec le deuxième contact 24.

De préférence, le module 14 comprend une deuxième série 26 de contacts comprenant le deuxième contact électrique 24.

L'interface 13 comprend ainsi dans ce cas les première 22 et deuxième 26 séries de contacts.

Dans cet exemple, les première 22 et deuxième 26 séries de contacts sont portées respectivement par des première Z1 et deuxième Z2 zones de l'interface 13.

En outre, comme cela est visible sur **la** **figure 3****,** au moins un contact est commun aux deux séries 22 et 26 et est formé par une plage de contact qui s'étend à la fois sur les première Z1 et deuxième Z2 zones. De préférence, le contact commun est le contact C5 défini par la norme ISO 7816 de la première série de contacts 22. Ce contact C5, également désigné par « GND », fournit une masse électrique commune au microcircuit 16 et aux équipements externes connectés à la carte 10 tels que la batterie principale 106 et la batterie auxiliaire 28. Ainsi, la deuxième série 24 comprend deux contacts externes, le contact C5 et le contact 24.

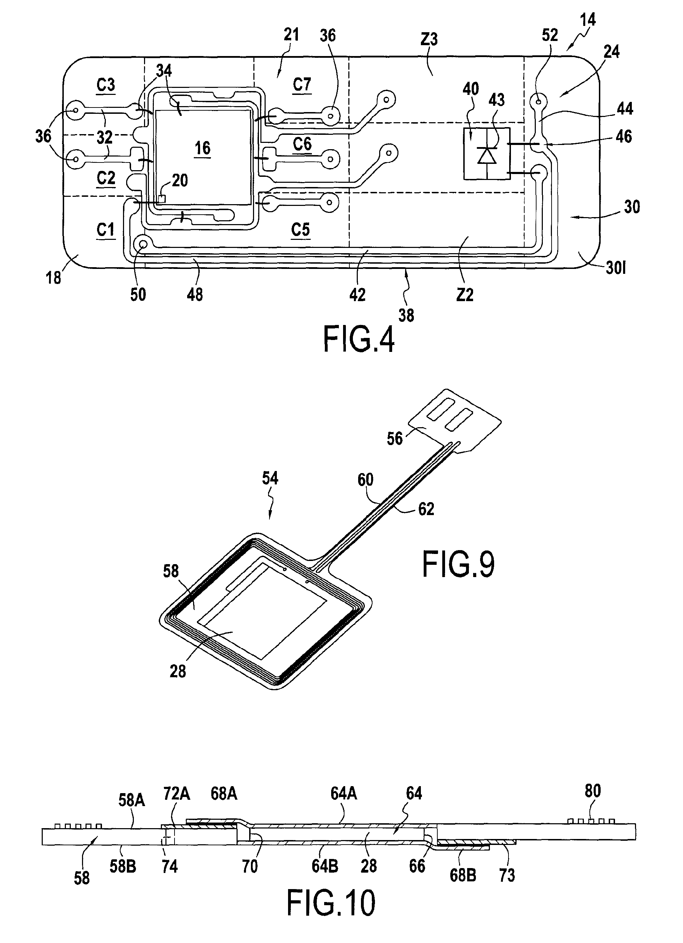

Comme cela est illustré en détail sur **la** **figure 4****,** la première série 22, représentée en trait discontinu sur cette figure, est raccordée au microcircuit 16 par l'intermédiaire de pistes électriquement conductrices 32 s'étendant sur la face interne 301 et par des fils électriquement conducteur 34 raccordant les bornes du microcircuit 16 aux pistes 32. Ces pistes 32 sont connectées électriquement avec les contacts de la première série 22 par les fils électriquement conducteur 34, tels que des fils d'or, traversant des vias 36 ménagés dans le support 30. La deuxième série de contacts 26 est également raccordée au microcircuit 16 de façon analogue.

Afin de gérer l'alimentation du microcircuit 16 par la batterie principale 106 et par la batterie auxiliaire 28, la carte 11 incorpore un organe conducteur 38, représenté en trait fort sur **la** **figure 4****.** Plus précisément, les premier 18 et deuxième 24 contacts sont raccordés à la borne 20 d'alimentation du microcircuit 16 par l'intermédiaire de cet organe 38.

De préférence, cet organe 38 est muni de première 42 et deuxième 44 branches conductrices comprenant une extrémité commune 46 raccordée électriquement à la borne d'alimentation 20 du microcircuit par une branche commune 48 et des première 50 et deuxième 52 extrémités opposées à l'extrémité commune 46, raccordées respectivement aux premier 18 et deuxième 24 contacts.

En outre, la première branche 42 est munie d'un premier interrupteur 40 susceptible d'adopter un premier état de raccordement électrique du premier contact 18 à la borne 20 et un deuxième état d'isolation électrique du premier contact 18 à la borne 20.

Dans le mode de réalisation illustré sur **la** **figure 4****,** l'interrupteur 40 est formé par une diode 43. Cette diode 43 est agencée sur la première branche 42 de manière à ce qu'elle autorise la circulation d'un courant dans un sens allant du premier contact 18 vers le deuxième contact 24 et à ce qu'elle interdise la circulation du courant dans un sens opposé.

On a représenté sur **la** **figure 5****,** de façon schématique l'organe 38 de raccordement du microcircuit 16 aux contacts 18 et 24. Ces contacts 18 et 24 sont eux-mêmes destinés à être raccordés respectivement à la batterie principale 106 et à la batterie auxiliaire 28.

Ainsi, lorsque la batterie principale 106 est déchargée, grâce à l'organe conducteur 38, la batterie auxiliaire 28 ne se décharge pas dans la batterie principale 106. En effet, la diode 43 empêche la circulation du courant dans ce sens. En outre, lorsque la batterie principale 106 est chargée, elle recharge la batterie auxiliaire 28 puisque la diode 43 autorise la circulation du courant dans un sens allant de la batterie principale 106 à la batterie auxiliaire 28.

Dans une première variante illustrée sur **la** **figure 6****,** l'interrupteur 40 est commandé par des moyens 41 de commande formés par exemple par une partie du microcircuit 16 de manière à ce que l'interrupteur 40 change d'état lors du franchissement à la baisse ou à la hausse d'un ou plusieurs seuils prédéfinis.

A cet effet, la première branche 42 est également munie de moyens 47 de mesure d'une intensité du courant la traversant tels que par exemple un shunt et lorsque cette intensité dépasse un premier seuil d'intensité prédéfini, l'interrupteur 40 bascule dans un état fermé pour permettre l'alimentation du microcircuit 16 et lorsque l'intensité descend en-dessous d'un deuxième seuil d'intensité prédéfini (qui peut être inférieur ou égale au premier seuil) l'interrupteur 40 bascule dans un état ouvert de manière à empêcher la circulation du courant dans le sens allant de la batterie auxiliaire 28 vers la batterie principale 106 ce qui aurait pour conséquence d'entraîner la décharge de cette dernière.

Dans une deuxième variante illustrée par **la** **figure 7****,** la deuxième branche 44 peut également être munie d'un interrupteur 40 sans que la première branche 42 ne soit munie d'un interrupteur. Dans cas, l'interrupteur 40 peut être également commandé par des moyens formés par exemple par une partie du microcircuit 16 en fonction d'un paramètre prédéfini. Ce paramètre prédéfini est par exemple l'activation d'une application nécessitant une alimentation additionnelle du microcircuit 16 dépassant celle délivrée classiquement par la batterie principale 106 seule. Ainsi, dans ce cas, la batterie auxiliaire 28 permet momentanément de fournir une alimentation additionnelle du microcircuit 16 pour le fonctionnement du microcircuit.

Enfin, dans une troisième variante illustrée par **la** **figure 8****,** les deux branches 42 et 44 sont munies chacune respectivement de premier 40A et deuxième 40B interrupteurs. Le microcircuit 16 peut comprendre dans ce cas des moyens de commande de la fermeture ou l'ouverture de ces deux interrupteurs en fonction de paramètres prédéfinis, tels que le franchissement à la hausse et/ou à la baisse d'un ou plusieurs seuils prédéfinis par l'intensité du courant traversant l'une ou l'autre des branches de l'organe, l'activation d'une ou plusieurs applications spécifiques nécessitant une alimentation simultanée des deux batteries, etc.

De préférence, comme cela est représenté sur **la** **figure 4****,** le support 30 porte sur sa face interne 30E le premier contact externe 18 et sur sa face interne 301 le microcircuit 16 et l'organe conducteur 38.

En outre, de préférence, l'organe conducteur 38 forme un circuit imprimé sur la face interne 301 du support. Ainsi, les branches de cet organe 38 forment des pistes imprimées sur le support 30.

Dans ce mode de réalisation, le deuxième contact 24 est un contact externe ce qui permet le raccordement d'une batterie additionnelle 28 externe au module 14. Ainsi, dans ce mode de réalisation, la batterie 28 est reliée au corps de carte 12 par un organe flexible 54 s'étendant au moins partiellement en-dehors du corps de carte 12 (**figure 1**). Cet organe 54 est représenté en détail sur **la** **figure 9****.**

Comme cela est représenté sur **la** **figure 9****,** l'organe flexible 54 comprend une première partie 56 d'extrémité agencée pour s'étendre sur la face 12A du corps de carte 12 portant l'interface 13 de contacts externes. Cette partie d'extrémité 56 forme dans ce cas connecteur électrique de la batterie 28 avec au moins un des deux contacts C5 et 24 de la deuxième série 26 de contacts.

En outre, l'organe flexible 54 comprend une deuxième partie d'extrémité 58 formant support de la batterie 28. Dans l'exemple décrit, les première 56 et deuxième 58 parties d'extrémités sont opposées entre elles et sont reliées par une partie médiane 60 de section amincie.

La première partie d'extrémité 56 formant connecteur est raccordée électriquement à la batterie 28 par au moins un élément 62 électriquement conducteur agencé pour s'étendre longitudinalement dans la partie médiane 60 Cet élément est par exemple un fil métallique.

Dans cet exemple, la batterie 28 est en forme générale de plaque et a une épaisseur inférieure ou égale à 150 microns. On a représenté sur la figure 10 une vue en coupe de la partie d'extrémité 56 formant support de batterie.

Dans ce mode de réalisation, la batterie 28 comprend un corps 64 délimitant des première et deuxième faces opposées 64A, 64B et une paroi latérale périphérique 66.

Chaque face 64A, 64B de la batterie 28 est pourvue d'au moins un prolongement 68A, 68B formant une languette de contact électrique, dépassant du corps, les languettes 68A, 68B étant agencées en position décalée les unes par rapport aux autres suivant la paroi périphérique 66 du corps 64 de la batterie 28.

Ces languettes 68 permettent le raccordement électrique de la batterie 28 à des composants électroniques externes à la batterie 28. Ces languettes 68 forment avantageusement des bornes électriques de la batterie 28. Dans ce mode de réalisation, la partie d'extrémité 58 de l'organe flexible 54 comprend un orifice 70 agencé pour recevoir la batterie 28 de manière à ce que les languettes 68 de la batterie 28 s'étendent chacune sur une des faces opposées de la partie d'extrémité 58.

En outre, comme cela est visible sur **les** **figures 1 et 2****,** des pistes 72 et 73 électriquement conductrices sont imprimées sur les faces 58A, 58B de la partie d'extrémité 58. Ainsi, la piste 73, portée par la face 58B de la partie 58, permet le raccordement électrique de la borne négative de la batterie 28 correspondant à la languette 68B au contact C5. La piste 73 est prolongée dans la partie médiane 60 par un fil électriquement conducteur jusqu'au contact C5 de la deuxième série 26.

En outre, la piste 72 comprend une partie 72A portée par la face 58A et une partie 72B portée par la face 58B. Les deux parties 72A, 72B sont raccordées électriquement par un fil électriquement conducteur traversant un via 74 ménagé dans la partie d'extrémité 58 (tel que représenté en pointillé sur **la** **figure 10**). Cette piste 72 est également prolongée par un fil électriquement conducteur jusqu'au contact 24 de la deuxième série 26 pour le raccordement de la borne positive de la batterie 28 correspondant à la languette 68A au contact 24.

De préférence, la batterie 28 est formée par une pile d'éléments de batterie tels qu'un élément d'anode, un élément de cathode, un élément d'électrolyte, des éléments de collecte de courants d'anode et de cathode. Ces éléments de collecte de courant d'anode et de cathode forment ainsi des bornes électriques et sont formés dans ce mode de réalisation par les faces opposées de la batterie 28.

La première partie d'extrémité 56 formant connecteur porte au moins une plage de contact (non visible sur les figures) agencée pour s'étendre en vis-à-vis d'au moins d'un contact de la deuxième série 26. Dans l'exemple décrit, la première partie 56 porte deux plages de contact de manière à connecter chacune des bornes positive et négative de la batterie 28 avec respectivement les contacts 24 et C5 de la deuxième série 26.

De préférence, la première partie d'extrémité 56 est agencée pour s'étendre sur la face 12A du corps de carte 12 portant l'interface 13 de contacts externes en laissant nus les plages de contacts (de façon partielle) de la première série 22 pour leur couplage électrique avec l'équipement externe.

Dans ce mode de réalisation, la première partie d'extrémité 56 comprend des évidements 76 aptes à coïncider, une fois l'organe flexible 54 rapporté sur la carte 10, avec les contacts de la première série 22 correspondant aux contacts C1, C2, C3, C5, C6, C7.

Dans le mode de réalisation illustré sur les figures, l'interface 13 comprend en outre une troisième série 77 de contacts 78 agencée pour être couplée électriquement à une antenne de communication 80 à champ proche. Dans ce cas, la première partie d'extrémité 56 forme connecteur électrique de l'antenne 80 avec au moins un contact 78 de la troisième série 77.

En outre, de préférence, la première partie d'extrémité 56 formant support porte l'antenne 80, cette dernière étant agencée pour s'étendre autour de la batterie 28 le long de la périphérie de la deuxième partie 58 formant support.

On va maintenant décrire en détail les principaux aspects du fonctionnement d'un dispositif électronique selon l'invention.

Conformément à **la** **figure 11**, la carte 11 est insérée dans le compartiment prévu à cet effet d'un terminal mobile 104. La face de la carte portant l'interface de contact est dirigée vers le fond du compartiment 100 de manière à ce que les plages de contact de la première série soient en vis-à-vis avec celles d'une tête de lecture du terminal mobile.

La partie d'extrémité de l'organe flexible 54 portant le support est alors déportée au-dessus de la batterie principale 106. En effet, la longueur de la partie médiane est choisie de manière à autoriser cette délocalisation.

La partie d'extrémité 58 formant support de batterie ayant sensiblement une épaisseur constante et égale à celle de la batterie est facilement insérable entre le couvercle du compartiment batterie du terminal et la batterie principale. Ainsi, l'incorporation d'une telle batterie ne nécessite pas d'adaptation de terminaux mobiles existants et la batterie peut être insérée dans un terminal mobile quelconque. Ceci permet d'implémenter dans n'importe quel terminal mobile le service « mobile paiement».

Il est bien entendu que les modes de réalisation qui viennent d'être décrits ne présentent aucun caractère limitatif et qu'ils pourront recevoir toute modification désirable sans sortir pour cela du cadre de l'invention qui est défini par les revendications attachées à la demande.

## Revendications

1. Dispositif électronique (10) comprenant une carte à microcircuit (11) d'identification à un réseau de téléphonie mobile, dans lequel la carte (11) comprend un microcircuit (16) muni d'une borne d'alimentation (20) et un premier contact électrique externe (18) apte à être couplé électriquement à une batterie principale (106) et raccordé électriquement au microcircuit (16), **caractérisé en ce que** le dispositif (10) comprend une batterie auxiliaire (28) **et en ce que** la carte (11) comprend :
- un deuxième contact électrique (24), distinct du premier contact (18), raccordé électriquement à la borne d'alimentation (20) du microcircuit (16) et à la batterie auxiliaire (28),
- un organe électriquement conducteur (38) de raccordement des premier (18) et deuxième (24) contacts à cette borne (20).

2. Dispositif (10) selon la revendication précédente, dans lequel, l'organe conducteur (38) comprenant des première (42) et deuxième (44) branches conductrices comprenant une extrémité commune (46) raccordée électriquement à la borne d'alimentation (20) et des première (50) et deuxième (52) extrémités opposées à l'extrémité commune (46), raccordées respectivement aux premier (18) et deuxième (24) contacts, la première branche (42) est munie d'un premier interrupteur (40) susceptible d'adopter un premier état de raccordement électrique du premier contact (18) à la borne (20) et un deuxième état de séparation du premier contact (18) et de la borne (20).

3. Dispositif (10) selon la revendication précédente, dans lequel le premier interrupteur (40) comprend une diode (43) agencée sur la première branche (42) afin d'autoriser la circulation d'un courant dans un sens allant du premier contact (18) vers le deuxième contact (24) et d'interdire la circulation du courant dans un sens opposé.

4. Dispositif (10) selon la revendication 2, dans lequel le microcircuit (16) comprend des moyens de commande du premier interrupteur (40) en fonction d'un paramètre prédéfini.

5. Dispositif (10) selon la revendication précédente, dans lequel, la première branche (42) portant des moyens de mesure d'une intensité du courant la traversant, le paramètre est défini comme étant le franchissement à la hausse et/ou à la baisse d'au moins un seuil prédéfini d'intensité par l'intensité du courant mesurée.

6. Dispositif (10) selon l'une quelconque des revendications 2 à 5, dans lequel la deuxième branche (44) est munie d'un deuxième interrupteur (45) susceptible d'adopter un premier état de raccordement de la batterie auxiliaire (28) à la borne d'alimentation (20) et un deuxième état de séparation de la batterie auxiliaire (28) et de cette borne (20).

7. Dispositif (10) selon l'une quelconque des revendications précédentes, dans lequel le deuxième contact (24) est un contact externe et la batterie auxiliaire (28) est externe à la carte (11).

8. Dispositif (10) selon l'une quelconque des revendications précédentes, dans lequel la carte (11) comprend un module (14) à microcircuit, ce module (14) comprend un support (30) portant sur l'une (30E) de ses faces (301, 30E), le premier contact externe (18) et, sur l'autre (30I) de ses faces (30I, 30E), le microcircuit (16) et l'organe conducteur (38).

9. Dispositif (10) selon la revendication précédente, dans lequel l'organe conducteur (38) forme un circuit imprimé sur l'une (30I) des faces du support (30).

10. Dispositif (10) selon l'une quelconque des revendications précédentes, dans lequel la carte (11) comprend une interface (13) de contacts externes affleurant à la surface de la carte (11) et comprenant les premier (18) et deuxième (24) contacts.

11. Dispositif (10) selon la revendication précédente, dans lequel l'interface (13) comprend une première série (22) de contacts externes, par exemple conforme à la norme ISO-7816, comprenant le premier contact (18) et une deuxième série (26) de contacts externes comprenant le deuxième contact (24), les première (22) et deuxième (26) séries étant respectivement agencées pour être couplées respectivement à des premier (104) et deuxième (28) équipements externes au microcircuit (16).

12. Dispositif (10) selon la revendication précédente, dans lequel les première (22) et deuxième (26) séries de contacts sont portées respectivement par des première (Z1) et deuxième (Z2) zones de l'interface (13).

13. Dispositif (10) selon la revendication précédente, dans lequel au moins un contact (C5) est commun aux deux séries (22, 26), par exemple le contact C5 défini par la norme ISO 7816 et est formé par une plage de contact (C5) qui s'étend sur les première (Z1) et deuxième (Z2) zones.

14. Dispositif (10) selon la revendication 8 ou 9, dans lequel le deuxième contact (24) est un contact interne au module (14) et la batterie auxiliaire (28) est incorporée dans le corps de la carte (11).

15. Système électronique (104), tel qu'un terminal mobile (104), comprenant un logement (100) pour une carte à microcircuit (11) et une batterie principale (106) d'alimentation du microcircuit (16), **caractérisé en ce qu'**il comprend un dispositif selon l'une quelconque des revendications précédentes, la batterie principale (106) étant couplée électriquement avec le premier contact (18) et la batterie auxiliaire (28) étant couplée électriquement avec le second contact (24).
